# FASCICULE DE BREVET EUROPEEN

(11) **EP 3 669 137 B1**
(45) Date de publication et mention de la délivrance du brevet: **28.06.2023**
(21) Numéro de dépôt: 18765734.1
(22) Date de dépôt: 08.08.2018
(51) Int. Cl.: G01B 7/26, G01B 11/22, G01D 11/30, F16B 21/02, F16B 21/04, G01M 17/02, B25G 3/16, F16B 7/20

(54) **SYSTÈME DE FIXATION AU SOL POUR BOITIER DE DÉTECTION**
BODENBEFESTIGUNGSSYSTEM FÜR EIN SENSORGEHÄUSE
GROUND-FIXING SYSTEM FOR A SENSOR HOUSING

(30) Priorité: 14.08.2017 FR 1770856
(43) Date de publication de la demande: 24.06.2020
(73) Titulaire: Compagnie Générale des Etablissements Michelin, 63000 Clermont-Ferrand (FR)
(72) Inventeur: LEROY, Vianney, 63040 Clermont-Ferrand Cedex 09 (FR)
(74) Mandataire: Roussy, Delphine
(86) Numéro de dépôt international: PCT/IB2018/055983
(87) Numéro de publication internationale: WO 2019/034968

(56) Documents cités:
- EP-A1- 2 759 718
- WO-A1-2015/011257
- DE-A1-102008 048 318

## Description

### DOMAINE TECHNIQUE DE L'INVENTION

La présente invention concerne un système de fixation au sol pour un boitier de détection de caractéristiques de pneumatiques.

### ETAT DE LA TECHNIQUE ANTERIEURE

Le document WO 2014202747 décrit un système de mesure de l'épaisseur d'une couche de matériau caoutchouteux d'un pneumatique. Il prend la forme d'un boitier à fixer au sol. En utilisation, ce type de boitier est soumis à de fortes contraintes du fait de nombreux passages de véhicules de tous types, y compris des poids lourds. Malgré ces fortes contraintes, le boîtier ne doit pas se déplacer ou se soulever. Les boîtiers sont donc souvent fixés au sol grâce à des aménagements importants effectués dans le sol. Ces aménagements impliquent d'importants travaux, longs et coûteux. Par ailleurs, si jamais un boîtier s'avère à être mal positionné, tout déplacement nécessite également d'importants travaux, avec des équipements lourds. Il existe donc un besoin pour permettre de fixer et repositionner facilement les boîtiers de mesure, avec une mise en oeuvre simplifiée. Les mécanismes de connexion rotative sont divulgués dans les documents EP2759718 A1 et DE102008048318 A1.

Pour pallier ces différents inconvénients, l'invention prévoit différents moyens techniques.

### EXPOSE DE L'INVENTION

Tout d'abord un premier objectif de l'invention consiste à prévoir un système de fixation pour boîtier de mesure de caractéristique de pneumatiques simple et rapide à implanter dans le sol.

Un autre objectif de l'invention consiste à prévoir un système de fixation pour boîtier de mesure de caractéristique de pneumatiques dont l'implantation peut être effectuée à l'aide d'outils courants.

Un autre objectif de l'invention consiste à prévoir un système de fixation économique et facilement industrialisable.

Un autre objectif de l'invention consiste à prévoir un système de fixation ne perturbant pas le fonctionnement du boîtier de mesure.

Un autre objectif de l'invention consiste à prévoir un système de fixation permettant de déplacer facilement et rapidement le boîtier latéralement selon une pluralité d'emplacements potentiels.

Pour ce faire, l'invention prévoit un système de fixation au sol pour boîtier de détection selon la revendication indépendante 1.

**Ces** caractéristiques permettent de créer un système de fixation très simple, peu coûteux et robuste, avec une mise en place et un repositionnement du boitier quasi-instantanés.

Par « aptes à coopérer avec les profils des logements de la plaque de fixation », on peut entendre «de profils sensiblement correspondants ou compatibles avec ceux des logements de la plaque de fixation».

De manière avantageuse, l'écart angulaire entre la position d'insertion et la position de verrouillage est inférieur à 300 degrés, et préférentiellement inférieur ou égal à 180 degrés, et encore plus préférentiellement de sensiblement 90 degrés. Cette caractéristique un verrouillage ou déverrouillage simple et rapide.

**De** nombreux profils peuvent être prévus comme par exemple un profil oblong, ou en forme d'étoile, ou en forme de croix, ou en forme de « T ».

Selon un mode de réalisation avantageux, le profil donné est oblong, et chaque pion comprend deux bords sensiblement droits et parallèles entre eux et deux bords incurvés à faces concaves sensiblement opposés. Dans ce cas, le pion a une forme « bi-conique », avec un profil supérieur oblong.

Selon encore un mode de réalisation avantageux, la forme et les dimensions des logements de la plaque de fixation sont adaptés pour l'insertion d'un pion et pour son verrouillage par rotation de sensiblement un quart de tour.

Cette caractéristique permet d'obtenir une pièce simple à réaliser par exemple par moulage et permet un verrouillage par rotation « quart de tour ».

De manière avantageuse, les logements ont un profil oblong avec deux bords incurvés avec des faces convexes, de profils et dimensions sensiblement complémentaires aux bords incurvés avec faces concaves des pions, pour permettre aux pions de coopérer en mode verrouillage avec les logements.

De manière avantageuse, chaque pion comprend au moins un moyen de blocage limitant ou empêchant la rotation.

Cette caractéristique permet d'éviter le déverrouillage involontaire des pions.

Selon diverses variantes, le moyen de blocage consiste soit en une pluralité de picots disposés sur la face opposée au boitier de détection, ou en au moins une lamelle flexible, ou en au moins une barrette de frottement.

La barrette est avantageusement mise en oeuvre avec un coefficient de frottement élevé.

Également de manière avantageuse, la plaque de fixation a une largeur supérieure à celle du boitier de détection, la pluralité de logements oblongs étant répartie sur sensiblement toute la largeur de la plaque.

**Ces** caractéristiques permettent de poser et fixer le boitier à différentes positions longitudinales de la plaque en fonction des besoins. Il en résulte une grande modularité.

### DESCRIPTION DES FIGURES

Tous les détails de réalisation sont donnés dans la description qui suit, complétée par les figures 1 à 8, présentées uniquement à des fins d'exemples non limitatifs, et dans lesquelles :
- La figure 1 est une représentation schématique d'un système connu de mesure de paramètres de pneumatique au moment où un véhicule roule sur le boîtier du système ;
- la figure 2 est une vue de dessus d'un exemple de plaque de fixation ;
- la figure 3 est une vue en perspective d'un exemple de pion de fixation en position de verrouillage sur une plaque;
- la figure 4 est une vue de profil du pion de fixation de la figure 3 ;
- la figure 5 est une vue en perspective d'un exemple de pion de fixation avec un système de blocage avec des picots;
- la figure 6 est une vue de dessus d'un autre exemple de pion de fixation avec un système de blocage avec lame flexible ;
- la figure 7 est une vue en perspective d'un autre exemple de pion de fixation avec une barrette de blocage ;
- la figure 8 illustre un autre type de pion de fixation.

### DESCRIPTION DETAILLEE DE L'INVENTION

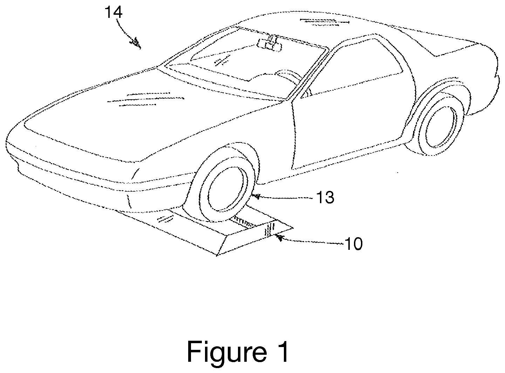

**La** figure 1 illustre un exemple d'un système 10 connu de mesure de l'épaisseur d'une couche de matériau caoutchouteux d'un pneumatique 13 d'un véhicule 14, tel que celui décrit dans le document WO2014202747. Lorsque le véhicule 14 roule sur le boîtier, des capteurs permettent d'effectuer une ou plusieurs mesures, comme par exemple des mesures d'épaisseur de bande de roulement du pneumatique 13. Pour effectuer les mesures, le dispositif est préférentiellement placé à un emplacement facilitant le passage des véhicules 14. Le mode de fixation du boîtier est donc avantageusement conçu de façon à bien supporter les fortes contraintes liées aux passages de nombreux véhicules. Ces contraintes requièrent une fixation fiable et durable, tel que décrit dans les figures suivantes.

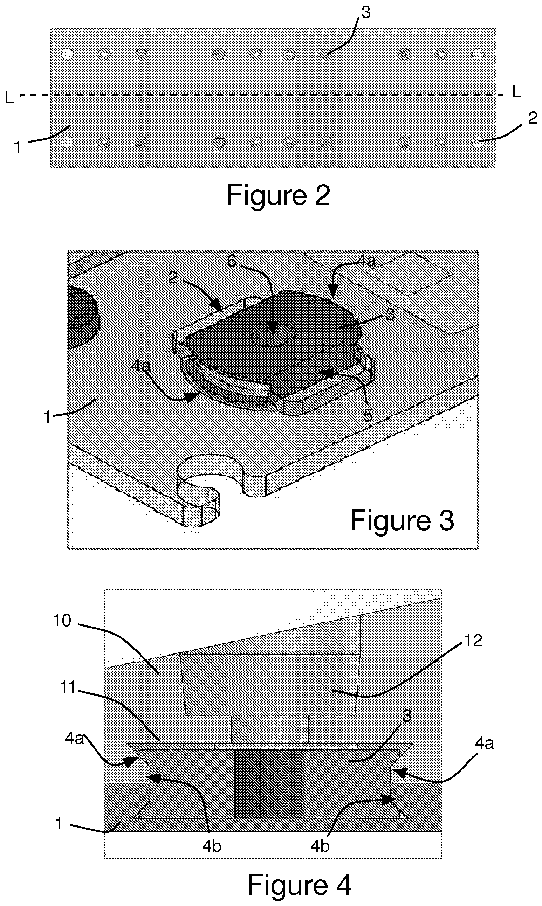

La figure 2 illustre un exemple de plaque de fixation 1. Dans cet exemple, la plaque est divisée en deux parties jointes l'une à l'autre pour fournir une plus grande largeur. La plaque 1 est fixée au sol par un moyen classique, comme par exemple de la colle. La plaque comporte une pluralité de logements 2. Dans l'exemple illustré, les logements sont alignés dans le sens longitudinal de la plaque, parallèlement aux bords et espacés de façon régulière. Chacun des logements 2 peut accueillir un pion de fixation 3. La longueur de la plaque 1 est préférentiellement supérieure à celle du boîtier 10 de mesure à fixer et le nombre de logements 2 est supérieur au nombre de pions à loger afin de permettre de positionner le boîtier à une pluralité d'emplacements le long de l'axe longitudinal L-L de la plaque 1. La géométrie de la plaque 1 et la méthode d'installation permettent alors de déplacer facilement le système de quelques centimètres pour s'adapter au mieux à la distribution statistique des passages connue après quelques temps d'utilisation du système.

La figure 3 illustre un exemple de réalisation d'un pion 3 inséré dans un logement 2 d'une plaque 1. Le pion de fixation 3 et le logement 2 sont de formes et dimensions sensiblement correspondantes. Dans les exemples illustrés, les profils sont de forme oblongue. D'autres profils peuvent être utilisés, comme par exemple en forme d'étoile, de « T », de « X », etc. Les formes correspondantes permettent d'une part une insertion et un retrait aisé des plots dans les logements.

Dans les exemples illustrés, le pion 3 oblong a deux bords incurvés avec des faces concaves 4a, disposés de façon opposée, et deux bords sensiblement droits 5, et sensiblement parallèles entre eux, disposés également de façon opposée. Une ouverture 6 est prévue au centre du pion 3. Cette ouverture permet par exemple l'insertion d'un outil permettant de positionner le pion dans la position souhaitée par rotation, soit en position d'insertion, soit en position de verrouillage.

Le logement 2, également oblong, comporte deux bords incurvés avec des faces convexes 4b, de profils et dimensions sensiblement complémentaires aux bords incurvés avec faces concaves 4a des pions, pour permettre au pion 3 de coopérer en mode verrouillage avec le logement 2, tel que montré dans l'exemple de la figure 4.

La figure 4 montre également un exemple d'intégration d'un pion avec un boitier 10 de détection de caractéristiques de pneumatique. Dans cet exemple, le boîtier 10 comprend une surface 11 d'accueil de pion collée ou sur le dessus d'un pion 4. Cette surface est montée libre en rotation pour pouvoir prendre la même position angulaire que le pion. Un barillet creux 12 permet l'accès à l'ouverture 6 du pion à l'aide d'un outil adapté, tel que préalablement décrit.

La solution est dimensionnée pour résister au freinage d'un camion à 70km/h, et à des centaines de milliers de passages d'essieux. Les choix de matériaux et de géométrie du pion 3 et de la plaque 1 sont prévus pour résister aux sollicitations mécaniques, notamment le cisaillement, la compression, et le matage. La plaque est avantageusement réalisée avec un matériau plastique à faible absorption d'eau, résistant aux hydrocarbures. De plus, le choix d'un plastique permet d'avoir une excellente permittivité électrique, perméabilité magnétique et de faibles pertes diélectriques.

Les pions 3 sont avantageusement fabriqués en polymère thermoplastique, comme par exemple en PBT, préférentiellement chargé en fibres de verre. En variantes, on peut également utiliser des pions réalisés en PET, PMMA, PC, ou en polyamide, de préférence chargé.

La plaque 1 est avantageusement fabriquée en polyester renforcé de fibre de verre (GPO3). On prévoit de préférence un matériau de la plaque 1 de dureté plus élevée que celui du pion, ce qui permet d'obtenir une dégradation des pions 3 avant celle de la plaque 1. En effet, le remplacement des pions 3 est simple et économique comparé à celui de la plaque 1. Le GPO3 est par ailleurs un matériau à faible tension de surface, à bonne porosité et à bonne affinité avec de nombreuses résines de collage.

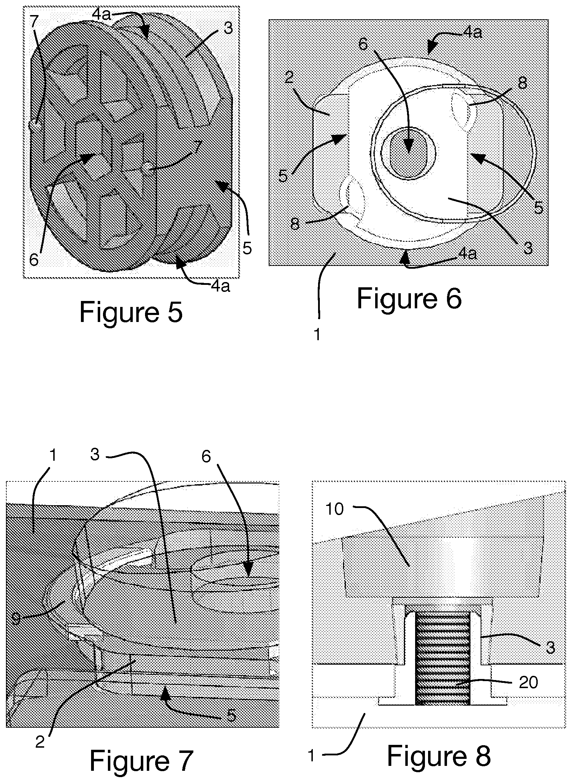

Les figures 5, 6 et 7 montrent les pions 3 avec des solutions « anti-rotation » permettant d'éviter toute rotation non souhaitée par exemple lors de vibrations dues au passage des véhicules. La figure 5 illustre une première solution dans laquelle le pion 3 injecté comporte des picots 7 de blocage. Dans l'exemple, les picots 7 sont deux protubérances distantes l'une de l'autre, agencées en périphérie du pion. Les picots se trouvent sur la face du pion 3 en contact avec le sol. Le matériau utilisé permet d'avoir un coefficient de frottement élevé et empêche le pion 3 de tourner malgré les vibrations occasionnées lors de l'utilisation du boitier de détection 10. Ceci permet d'éviter un déverrouillage involontaire des pions 3.

Les figures 6 et 7 sont des variantes de moyens anti-rotation. Des lames de blocage 8, illustrées dans l'exemple de la figure 5, jouent le rôle de ressort pour permettre un montage et/ou un démontage du boitier de détection 10, tout en évitant la rotation du pion 3. Dans cet exemple, les lames 8 sont disposées à l'intersection du bord droit 5 et du bord convexe 4 du pion.

La figure 7 montre une barrette 9 de blocage comportant un coefficient de frottement élevé. Dans cet exemple, la barrette est réalisée par bi-injection en matériau EPDM, avec une dureté de 30 Shore A. La barrette 9 est disposée sur un bord convexe 4 du pion 3.

La figure 8 est une variante du mode de fixation du boitier de détection 10 sur la plaque 1. Le pion 3 possède une ouverture avec un insert métallique 20 taraudé assemblé dans la plaque. Dans cet exemple, une cale conique permet d'ajuster la mise en position selon la tolérance de fabrication du capteur.

### Numéros de référence employés sur les figures

1. Plaque de fixation
2. Logement oblong
3. Pion de fixation
4a. Bords concaves du pion
4b. Bords convexes du logement
5. Bords sensiblement droits et parallèles entre eux
6. Ouverture
7. Picots de blocage
8. Lamelle flexible de blocage
9. Barrette de frottement
10. Boitier de détection de caractéristiques de pneumatique
11. Surface d'accueil de pion
12. Barillet creux
13. Pneumatique
14. Véhicule
20. Insert taraudé

## Revendications

1. Système de fixation au sol pour boitier de détection (10) de caractéristiques de pneumatiques, la fixation du boîtier étant conçue de façon à bien supporter les fortes contraintes liées aux passages de nombreux véhicules sur le boîtier, ledit système de fixation au sol comprenant :
i) une plaque de fixation (1) comprenant une pluralité de logements (2) d'un profil donné répartis sur la surface de la plaque de fixation ;
ii) une pluralité de pions de fixation (3) aptes à coopérer avec les profils des logements (2) de la plaque de fixation, répartis de façon similaire sur une face de fixation dudit boîtier de détection (10) avec un degré de liberté en rotation de façon à permettre l'insertion des pions et leur blocage par simple rotation dans les logements correspondants ;
iii) les formes et dimensions des logements (2) et des pions (3) de fixation étant prévus de façon à permettre d'une part, dans une position d'insertion des pions, un engagement de ces derniers dans lesdits logements, et d'autre part, dans une position de verrouillage des pions résultant d'une rotation desdits pions, une fixation du boîtier de détection (10) sur la plaque de fixation (1).

2. Système de fixation selon la revendication 1, dans lequel l'écart angulaire entre la position d'insertion et la position de verrouillage est inférieur à 300 degrés, et préférentiellement inférieur ou égal à 180 degrés, et encore plus préférentiellement de sensiblement 90 degrés.

3. Système de fixation selon l'une des revendications 1 ou 2, dans lequel ledit profil donné est oblong, ou en forme d'étoile, ou en forme de croix, ou en forme de « T ».

4. Système de fixation selon l'une des revendications 1 ou 2, dans lequel le profil donné est oblong, et dans lequel chaque pion (3) comprend deux bords sensiblement droits (5) et parallèles entre eux et deux bords incurvés à faces concaves (4) sensiblement opposés.

5. Système de fixation selon l'une quelconque des revendications précédentes, dans lequel la forme et les dimensions des logements (2) de la plaque de fixation (1) sont adaptés pour l'insertion d'un pion (3) et pour son verrouillage par rotation de sensiblement un quart de tour.

6. Système de fixation selon l'une quelconque des revendications précédentes, dans lequel les logements (2) ont un profil oblong avec deux bords incurvés avec des faces convexes (4b), de profils et dimensions sensiblement complémentaires aux bords incurvés avec faces concaves (4a) des pions, pour permettre au pion (3) de coopérer en mode verrouillage avec le logement (2).

7. Système de fixation selon l'une des revendications 1 à 4, dans lequel chaque pion (3) comprend au moins un moyen de blocage limitant ou empêchant la rotation.

8. Système de fixation selon la revendication 7, dans lequel le moyen de blocage consiste en une pluralité de picots (7) disposés sur la face opposée au boitier de détection (10).

9. Système de fixation selon la revendication 7, dans lequel le moyen de blocage consiste en au moins une lamelle flexible (8) de blocage.

10. Système de fixation selon la revendication 7, dans lequel le moyen de blocage consiste en au moins une barrette de frottement (9).

11. Système de fixation selon l'une quelconque des revendications précédentes, dans lequel la plaque de fixation (1) a une largeur supérieure à celle du boitier de détection (10), la pluralité de logements (2) étant répartie sur sensiblement toute la largeur de la plaque (1).

## Patentansprüche

1. Bodenbefestigungssystem für ein Sensorgehäuse (10) für Reifenmerkmale, wobei die Befestigung des Gehäuses so ausgelegt ist, dass es den starken Beanspruchungen im Zusammenhang mit den Überfahrten vieler Fahrzeuge über das Gehäuse gut standhält, wobei das Bodenbefestigungssystem Folgendes umfasst:
i) eine Befestigungsplatte (1), die eine Mehrzahl von Aufnahmen (2) mit einem bestimmten Profil umfasst, die auf der Oberfläche der Befestigungsplatte verteilt sind;
ii) eine Mehrzahl von Befestigungsklötzen (3), die geeignet sind, mit den Profilen der Aufnahmen (2) der Befestigungsplatte zusammenzuwirken, die auf ähnliche Weise auf einer Befestigungsfläche des Sensorgehäuses (10) mit einem Drehfreiheitsgrad verteilt sind, um die Einführung der Klötze und deren Blockierung durch einfache Drehung in den entsprechenden Aufnahmen zu ermöglichen;
iii) wobei die Formen und Abmessungen der Aufnahmen (2) und der Befestigungsklötze (3) so vorgesehen sind, dass einerseits in einer Einführungsposition der Klötze ein Eingriff dieser in die Aufnahmen und andererseits in einer Verriegelungsposition der Klötze, die aus einer Drehung der Klötze hervorgeht, eine Befestigung des Sensorgehäuses (10) auf der Befestigungsplatte (1) ermöglicht wird.

2. Befestigungssystem nach Anspruch 1, wobei der Winkelabstand zwischen der Einführungsposition und der Verriegelungsposition kleiner als 300 Grad und vorzugsweise kleiner als oder gleich 180 Grad ist und besser noch im Wesentlichen 90 Grad beträgt.

3. Befestigungssystem nach einem der Ansprüche 1 oder 2, wobei das bestimmte Profil länglich oder sternförmig oder kreuzförmig oder T-förmig ist.

4. Befestigungssystem nach einem der Ansprüche 1 oder 2, wobei das bestimmte Profil länglich ist und wobei jeder Klotz (3) zwei im Wesentlichen gerade und zueinander parallele Kanten (5) und zwei gekrümmte Kanten mit konkaven, im Wesentlichen gegenüberliegenden Seiten (4) umfasst.

5. Befestigungssystem nach einem der vorhergehenden Ansprüche, wobei die Form und die Abmessungen der Aufnahmen (2) der Befestigungsplatte (1) für die Einführung eines Klotzes (3) und dessen Verriegelung durch Drehen im Wesentlichen um eine Vierteldrehung geeignet sind.

6. Befestigungssystem nach einem der vorhergehenden Ansprüche, wobei die Aufnahmen (2) ein längliches Profil aufweisen, mit zwei gekrümmten Kanten mit konvexen Seiten (4b), mit Profilen und Abmessungen, die zu den gekrümmten Kanten mit konkaven Seiten (4a) der Klötze im Wesentlichen komplementär sind, um es dem Klotz (3) zu ermöglichen, im Verriegelungsmodus mit der Aufnahme (2) zusammenzuwirken.

7. Befestigungssystem nach einem der Ansprüche 1 bis 4, wobei jeder Klotz (3) wenigstens ein Blockiermittel umfasst, das die Drehung begrenzt oder verhindert.

8. Befestigungssystem nach Anspruch 7, wobei das Blockiermittel aus einer Mehrzahl von Erhebungen (7) besteht, die auf der Seite angeordnet sind, die dem Sensorgehäuse (10) gegenüberliegt.

9. Befestigungssystem nach Anspruch 7, wobei das Blockiermittel aus wenigstens einer flexiblen Blockierlamelle (8) besteht.

10. Befestigungssystem nach Anspruch 7, wobei das Blockiermittel aus wenigstens einem Reibstollen (9) besteht.

11. Befestigungssystem nach einem der vorhergehenden Ansprüche, wobei die Befestigungsplatte (1) eine größere Breite als die des Sensorgehäuses (10) aufweist, wobei die Mehrzahl von Aufnahmen (2) im Wesentlichen über die gesamte Breite der Platte (1) verteilt ist.

## Claims

1. Ground-fixing system for a tyre characteristics sensor housing (10), the housing fixing being designed to withstand the severe stresses associated with numerous vehicles driving over the housing, said ground-fixing system comprising:
i) a fixing plate (1) comprising a plurality of recesses (2) of a given profile distributed over the surface of the fixing plate;
ii) a plurality of fastening pins (3) suitable for cooperating with the profiles of the recesses (2) of the fixing plate, similarly distributed on a fixing face of said sensor housing (10) with a degree of freedom in rotation so as to allow the pins to be inserted and immobilized by simple rotation in the corresponding recesses;
iii) the shapes and dimensions of the recesses (2) and of the pins (3) for fixing being provided so as to allow, on the one hand, in a position of insertion of the pins, engagement of the latter in said recesses and, on the other hand, in a locking position of the pins resulting from a rotation of said pins, fixing of the sensor housing (10) on the fixing plate (1).

2. Fixing system according to Claim 1, wherein the angular difference between the insertion position and the locking position is less than 300 degrees, and preferably less than or equal to 180 degrees, and even more preferably substantially 90 degrees.

3. Fixing system according to either of Claims 1 and 2, wherein said given profile is oblong, or star-shaped, or cross-shaped, or T-shaped.

4. Fixing system according to either of Claims 1 and 2, wherein the given profile is oblong, and wherein each pin (3) comprises two edges (5) that are substantially straight and mutually parallel and two substantially opposite curved edges with concave faces (4).

5. Fixing system according to any one of the preceding claims, in which the shape and the dimensions of the recesses (2) of the fixing plate (1) are suitable for the insertion of a pin (3) and for locking same by rotation of substantially a quarter turn.

6. Fixing system according to any one of the preceding claims, in which the recesses (2) have an oblong profile with two curved edges with convex faces (4b), profiles and dimensions substantially complementary to the curved edges with concave faces (4a) of the pins, to allow the pin (3) to cooperate, in the locking mode, with the recess (2).

7. Fixing system according to one of Claims 1 to 4, wherein each pin (3) comprises at least one immobilizing means limiting or preventing rotation.

8. Fixing system according to Claim 7, wherein the immobilizing means consists of a plurality of studs (7) disposed on the face opposite the sensor housing (10).

9. Fixing system according to Claim 7, wherein the immobilizing means consists of at least one flexible immobilizing strip (8).

10. Fixing system according to Claim 7, wherein the immobilizing means consists of at least one friction bar (9).

11. Fixing system according to any one of the preceding claims, wherein the fixing plate (1) has a width greater than that of the sensor housing (10), the plurality of recesses (2) being distributed over substantially the entire width of the plate (1).
